# EUROPEAN PATENT APPLICATION

(11) **EP 3 173 703 A1**
(43) Date of publication of application: **31.05.2017**
(21) Application number: 15196847.6
(22) Date of filing: 27.11.2015
(51) Int. Cl.: F24D 17/02, F24D 17/00

(54) **PRE-HEATING THERMAL STORE**

(71) Applicant: Sharp Kabushiki Kaisha, Osaka, Osaka 545-8522 (JP)
(72) Inventor: TOMLIN, Michael Charles, Abingdon, Oxfordshire OX14 1XN (GB); DIMMOCK, James Andrew Robert, Oxford, oxfordshire OX1 5AS (GB); BARRETT, Jacob Thomas, Chester, Cheshire CH1 4AE (GB)
(74) Representative: Suckling, Andrew Michael

(57) **Abstract**

A heating system for heating and supplying a supply fluid has a heat source (1) and first and second heat stores (7, 4) connected in series with the heat source. In a first mode of operation, a process fluid is circulated from the heat source (1) through, sequentially, the first heat store (7) and then the second heat store (4). The second heat store (4) comprises a body, and at least first one heat exchanger (6) associated with the body for receiving supply fluid. The first heat store (7) comprises a body for receiving supply fluid from the second heat store for heating by process fluid received at the first store (7) from the heat source (1).

The second heat store acts to pre-heat incoming supply fluid. However, arranging for the incoming supply fluid to pass through a heat exchanger thermally associated with the body of the second heat store means that providing the second heat store results in only a slight increase in the amount of supply fluid stored in the heating system store - and so results in only a slight increase in the amount of supply fluid that must be heated to pasteurise the stored supply fluid.

## Description

### TECHNICAL FIELD & BACKGROUND

The invention relates to the storage of heat in the form of hot water. A novel tank arrangement is utilized, that achieves excellent stratification, safe storage and efficient operation of a heat pump.

The cost and quality of heat and power available to a heat pump can vary substantially over a 24-hour period. Thermal storage enables a heat management system to exploit the variability in energy cost and quality whilst providing a continuous heat quality to the user. Safe storage of sanitary water requires the prevention of growth of legionella bacteria. Legionella is commonly found in tap water. Beyond critical concentrations, it can pose a risk to users of developing Legionnaire's disease. Populations of Legionella bacteria multiply in water temperatures between 25°c and 45°C, and can survive at temperatures up to 50°C. For this reason, it is common practice to periodically pasteurise large volumes of stored water to temperatures above 50°C. Minimising the quantity of stored sanitary water minimizes the mass of water that should be pasteurised and the energy required to do this.

The invention disclosed herein details a hot water storage system that maintains user comfort and safety, whilst maximizing efficiency of a variable-cost heat source and the utilisation of space.

### BACKGROUND ART

EP2035753B1 (Becker, published June 20, 2007) describes a pre-heating tank and a buffer reservoir to store source heat for a heat pump. This improves the temperature stability of the system by buffering the return temperature to the heat pump from a highly variable heat source. The solution has a storage vessel with coils accepting fluid from the load side of the heat pump, and a solar heated source. This tank is used for both hot water provision and space heating, and as such is limited in security of supply, due to the use of only 1 tank in the invention and its multi-purpose use.

JP61134538A (Mitsubishi, published June 21, 1986) describes a water heating arrangement whereby a refrigerant circuit has two heated tanks. Firstly there is a low temperature tank, which serves as a pre-heated water supply for the main tank. A thermostat switches a circulating pump on when a temperature threshold is reached, to circulate water from the base of the tank and through a heat exchanger to sub-cool the circulating refrigerant. The primary tank has a similar arrangement, though a higher temperature threshold. When the temperature drops below the thermostat threshold, a pump circulates water from the tank through a heat exchanger, which condenses the hot gas refrigerant.

US6364002B1 (IVT Installations, published August 24, 2000) describes an integrated thermal store unit with high temperature and low temperature latent heat storage, heat input from a solar collector and optionally integrated boiler. Hot water is heated through a heat exchange coil. The heating feed for space heating enters into the main body of fluid. The heat storage apparatus attempts to improve stratification through the use of phase change materials, and provide all heat storage means in a single tank.

### SUMMARY OF INVENTION

For optimal storage of heat, these prior art devices all have limitations in design that are overcome by the current invention. Therefore, described herein is a hot water storage system that improves upon the prior art.

An aspect of the present invention provides a heating system for heating a supply fluid, the system comprising: a heat source; first and second heat stores connected in series with the heat source, the system being configured to, in a first mode of operation, circulate a process fluid from the heat source through, sequentially, the first heat store and then the second heat store; wherein the second heat store comprises a body, and at least one first one heat exchanger associated with the body of the second heat store for receiving supply fluid; and wherein the first heat store comprises a body for receiving supply fluid from the second heat store for heating by process fluid received at the first store from the heat source.

The second heat store acts to pre-heat incoming supply fluid (for example sanitary water) before the supply fluid passes to the first heat store, thereby increasing the amount of heated supply fluid that the first heat store can provide. However, arranging for the incoming supply fluid to pass through a heat exchanger thermally associated with (for example provided in or on) the body of the second heat store means that providing the second heat store results in only a slight increase in the amount of supply fluid stored in the heating system store (as only a small volume of supply fluid will be contained in the heat exchanger) - and so results in only a slight increase in the amount of supply fluid that must be heated to a temperature above 50ºC to pasteurise the supply fluid stored in the heating system and only a slight increase in the capacity of the expansion vessel required for the supply fluid circuit.

Arranging for the supply fluid to pass through the body of the first heat store should ensure that there is a sufficient volume of supply fluid available for a user's needs. In principle the supply fluid could instead pass through a heat exchanger provided in/on the first heat store, but this would reduce the volume of stored, heated supply fluid.

The first heat store may comprise at least one heat exchanger associated with the body of the first heat store for receiving process fluid from the heat source.

The body of the second heat store may receive, in use, process fluid exiting the heat exchanger(s) of the first heat store.

Alternatively, the second heat store may comprise at least one second heat exchanger associated with the body of the second heat store, and the second heat exchanger(s) of the second heat store may receive, in use, process fluid exiting the heat exchanger(s) of the first heat store. In this case the body of the second heat store may contain a phase change material. The phase change material may have a liquid-solid phase-change temperature in the range 20° to 60 °C.

The second heat store may comprise at least one third heat exchanger associated with the body of the second heat store, and the system may further comprise another heat source for heating process fluid supplied to the third heat exchanger(s).

Additionally or alternatively the second heat store may comprise at least one third heat exchanger associated with the body of the second heat store, and wherein the system further comprises a heat sink for receiving process fluid from the third heat exchanger(s).

Where the heating system comprises both the another (auxiliary) heat source and the heat sink, they may be incorporated in a single device (such as a heat exchanger exposed to outdoor air) or they may be separate components.

The heating system may be selectively operable in a second mode that allows process fluid leaving the first heat store to bypass the second heat store and return direct to the heat source.

The heating system may comprise: a fluid bypass connected in parallel with the path of process fluid through the second heat store; and a valve for selectively opening the fluid bypass.

The vertical distance between an entry port and an exit port of the first heat exchanger in the second heat store is greater than half the internal height of the second heat store.

The process fluid may be water containing a corrosion inhibitor, or it may be a water-glycol mixture containing a corrosion inhibitor.

The heat source may comprise a heat pump.

According to a first embodiment of the invention, a process fluid (for example water) transports heat from a heat source (in one embodiment being a heat pump) into a heat exchanger immersed in a body of sanitary water within a storage vessel (store 1). The heat exchange fluid then exits this first storage vessel and flows into a second storage vessel (store 2), entering directly into the main body of fluid. Store 2 contains another heat exchanger which serves to preheat the sanitary water that feeds store 1.

With the flow of process fluid through the system, store 1 is maintained at a higher temperature than store 2. Process fluid from the heat pump enters store 1 and transfers the highest fraction of its heat at temperatures useful for domestic hot water. Store 2 is maintained at a lower temperature to serve as a pre-heating store for the sanitary hot water. The arrangement of sanitary water flow through the system of stores causes the process fluid in store 2 to become thermally stratified, minimising the temperature of the process fluid returning to the heat pump.

Optionally store 2 contains one or more supplementary heat exchangers, for indirect heat transfer into or out of the store.

Optionally store 2 contains a latent heat storage material.

Optionally store 2 contains one or more heat exchangers for extraction or delivery of heat directly from the store without passing through store 1.

Optionally a divert valve controls the flow of process fluid into a secondary heat exchanger in store 2, to give the option of bypassing store 2.

To the accomplishment of the foregoing and related ends, the following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### BRIEF DESCRIPTION OF DRAWINGS

In the annexed drawings, like references indicate like parts or features:
Figure 1 shows a plumbing arrangement of a thermal store and water tank, with the process fluid from the heat pump circulating sequentially through a heat exchanger in the tank, and then through the fluid body of the pre-heating store.
Figure 2 shows an alternative plumbing arrangement of a thermal store and water tank, with the heat pump circulating process fluid sequentially through a heat exchanger in the tank, and a heat exchanger immersed in the pre-heating store.
Figure 3 shows an alternative plumbing arrangement of a thermal store and water tank, with an additional heat exchanger immersed in the pre-heating store through which an auxiliary process fluid is circulated to heat or cool the store. An immersion heater exists in the first heat store to allow the system to take advantage of low cost electricity.
Figure 4 shows an alternative plumbing arrangement of the thermal store and water tank, with a divert valve and heat exchanger in the thermal store to allow bypass of the thermal store

### DESCRIPTION OF REFERENCE NUMERALS

- 1.: Heat pump
- 2.: Return to heat pump
- 3.: Inlet from heat pump
- 4.: Store B
- 5.: Store B main heat storage material body
- 6.: Store B heat exchanger
- 7.: Store A
- 8.: Store A sanitary water
- 9.: Store A heat exchanger
- 10.: Cold sanitary water inlet
- 11.: Hot sanitary water outlet
- 12.: Phase change material
- 13.: Auxiliary process fluid heat exchanger
- 14.: Auxiliary heat source or sink
- 15.: Immersion heater
- 16.: Divert valve

### DETAILED DESCRIPTION OF INVENTION

A hot water storage system is described herein. As a non-exhaustive example, preferred embodiments could be used as part of a domestic or commercial heat pump installation to allow for maximum provision of hot water with optimal system efficiency and configurability of component location.

In one embodiment, the invention consists of two tanks of similar construction, though configured in an inverse fashion. The first tank, referred to as store A, is a hollow vessel for holding a quantity of fluid that is to be stored and supplied at a temperature above ambient temperature (hereinafter "supply fluid"). (The invention is described below with reference to embodiments in which the fluid to be supplied is water, specifically water that is intended for human use and so is required to satisfy various sanitary requirements (hereinafter "sanitary water"). However, the invention is not in principle limited to this.) The first tank contains a heat exchanger (made from, for example stainless steel) immersed in, or otherwise in thermal contact with, water held in the hollow vessel. The second tank, store B, is similarly a hollow vessel containing at least one heat exchanger. The arrangement is configured such that a process fluid circulating in the heat exchanger of store A is passed directly into the top of store B, such that process fluid exiting from the heat exchanger of store A enters the main body of the tank of store B. This process fluid is for example corrosion-inhibited fluid (such as water containing a corrosion inhibitor or a water-glycol mixture containing a corrosion inhibitor) carrying heat from a heat source such as a heat pump though the circuit made by the two vessels. Similarly, supply fluid flowing through the heat exchanger of store B is then passed into the main body of store A. The supply fluid for example being sanitary water supplied at a pressure exceeding 1 bar gauge. The heat source may derive heat in any suitable way, and may be a "renewable" heat source such as a solar or biomass heat source.

The large volume of process fluid stored at lower temperature in store B (that is, at a lower temperature than the temperature of store A) means that there is a large, thermally-stratified buffer on the return side to a heat pump used to circulate the process fluid. This is beneficial for heat pumps in particular, as low load-side temperatures increase the operational efficiency by reducing the pressure ratio of the working fluid.

Having the two storage vessels is also beneficial for versatility of location of the two vessels. A single large tank will often be more difficult to accommodate and manoeuvre than two smaller tanks, allowing more versatility in installed configuration.

The addition of a pre-heating thermal store (store B) to a hot water tank (store A) as described here increases the quantity of sanitary water exceeding a threshold temperature that can be delivered to the user. The conventional solution to this problem, a larger hot water tank (store A), has various disadvantages as compared to this invention.

### Advantages of the invention compared to the prior art include

- Storing additional water in a sanitary water tank increases the volume of water that must be either maintained at a temperature > 50°C or periodically pasteurised to a temperature > 60°C to prevent the growth of the bacteria legionella which is hazardous to human health. The use of process fluid in store B to store the additional heat avoids the need for this increase in high temperature maintenance, thus reducing the operating cost of the system.
- Greater installation flexibility: The two vessels (store A and store B) can be installed in distinct locations, for example store A in a loft and store B in a garage or airing cupboard. This modularity of design eliminates the need for a single storage location of sufficient size to house the combined volume of a single larger water tank.
- The series configuration of the heat storage in this invention reduces passive thermal mixing due to conductive heat transfer through the tank walls as a result of the physical separation of the hotter and cooler stores. The pipes connecting the two stores may be made of a material with low thermal conductivity, such as a plastics material, to minimise heat transfer through the pipes.
- The storage of a large volume of process fluid in store B provides a more stable and predictable return temperature to the heat pump than a heat exchange coil in store A could offer.
   The large area of contraflow heat exchange between the sanitary water (or other supply fluid) and process fluid in this invention minimises the temperature difference between the cold supply of sanitary water and the process fluid returning to the heat pump. The lower return temperature of process fluid returning to the heat pump results in improved heat exchange through the condenser of the heat pump, reducing the condensing temperature and specific power consumption, especially at conditions of very low source temperature.
- Pre-heating of incoming sanitary water in store B (by the process fluid) prevents the temperature of sanitary water in store A from falling much below the minimum desired outlet temperature for sanitary water leaving store A. Therefore the time to re-heat store A to an operational temperature is reduced, meaning that either the user has less time to wait for the storage to be re-charged after being discharged or the heating system can be more selective in the timing of its operation.
- It is possible to use a phase change material in the second heat store, and this allows for a more stable temperature in the pre-heating store. This would allow more predictable management of the pre-heating capability of store B.
- It is possible to use one or more phase change materials in the second heat store, and this allows for a greater stored energy density owing to energy storage in the latent heat of fusion
- It is possible to use a secondary heat exchanger inside store B to input heat from a supplementary source such as solar thermal panels. Solar thermal panels can have variable outlet temperatures. By using the low temperature store, store B, to receive heat from the supplementary heat source it is more likely that the temperature of the fluid inside store B will be below that of the supply temperature from the supplementary source and thus a greater amount of solar heat could be stored.
- It is possible to use a secondary heat exchanger inside store B to utilise the stored volume of low-grade heat for additional functions. This could be due to either surplus of supply, for example when an immersion heater can boost the temperature of the store with low cost electricity, or due to low demand, when there is little hot water usage expected. This low-grade heat could be used for example to defrost heat exchangers of an air source heat pump, by circulating process fluid through the heat exchanger in the store and the heat exchangers of a heat pump. Such heat exchangers are known to suffer an accumulation of frost during periods of high relative humidity at air temperatures below 8°C, which restricts the flow of air through the heat exchanger until the heat pump is forced to stop to enable defrosting.

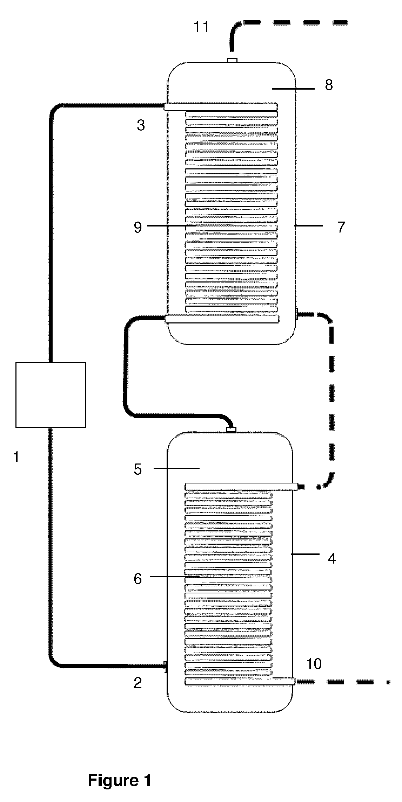

Figure 1 shows a system according to one embodiment of the present invention. As shown in figure 1, the system includes firstly a store 7 (corresponding to "store A" mentioned above) holding sanitary water 8 that is heated through at least one heat exchanger 9 with heat provided from a heat pump 1. Process fluid (or "heat exchange fluid") from the heat pump 1 flows into the heat exchanger 9 and releases heat energy at high temperature to the fluid 8 contained in the body of the first store 7. The process fluid then flows out of the first heat exchanger 9 and into the main body of fluid of a second store 4 (corresponding to "store B" mentioned above). An outlet 2 from this second store 4 returns the process fluid back to the heat pump 1.

The system is supplied with sanitary water to be heated and stored. Incoming cold sanitary water flows into a heat exchanger 6 provided in the second store 4 via an inlet 10. As the incoming sanitary water flows through the heat exchanger 6 of the second store, heat is transferred from the process fluid held in the second store 4 to the sanitary water so as to pre-heat the sanitary water before it flows out of the heat exchanger 6 provided in the second store 4 and into the main body 8 of the first store 7. The sanitary water is then further heated in the first store 7, as described above. Hot water for the user is tapped off 11 from the top of the first store 7.

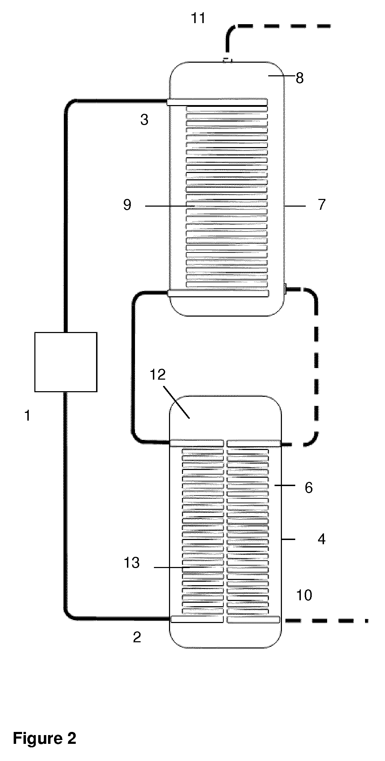

As shown in figure 2, in another embodiment the process fluid does not flow directly into the main body 5 of the second store 4, but instead flows into another heat exchanger 13 provided in/on the second store 4. In this embodiment the main body 5 of the second store 4 contains a heat transfer medium, such as a body of liquid or a solid, by which heat passes from the process fluid to the heat transfer medium via the another heat exchanger 13, and then passes from the heat transfer medium to the sanitary water via the heat exchanger 6. The heat transfer medium may be a phase-change material, for example a phase change material having a liquid-solid phase-change temperature in the range between 20° and 60°C, such as paraffin. This embodiment could allow a smaller stored volume of material than if using purely sensible heat storage.

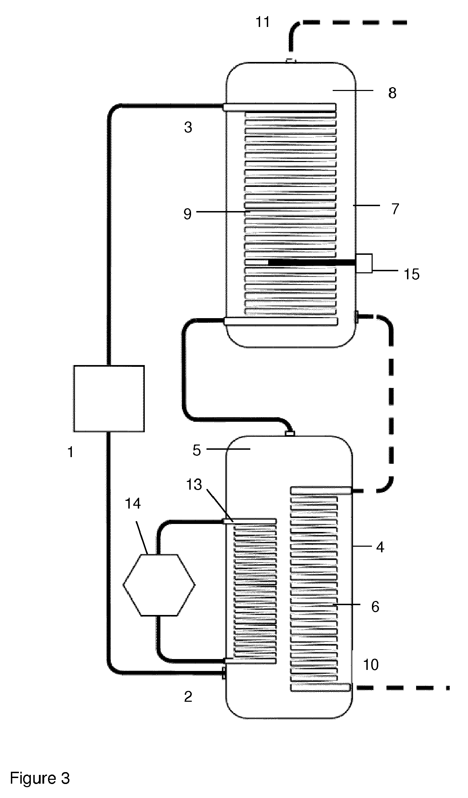

Figure 3 shows a further embodiment of the invention, which is based on the embodiment of figure 1. As shown in figure 3, in this embodiment, the second store 4 further contains a secondary heat exchanger 13 to supply heat from process fluid circulating through an auxiliary heat source 14 or extract heat from process fluid circulating through a heat sink 14.

A heat source such as solar thermal panels can provide a heat source of variable temperature. Through heat transfer to a low temperature store 4, a wide range of input temperatures from an auxiliary heat source 14 can be accepted, without risk of degrading the temperature of the stored fluid. Additionally or alternatively, at times the total heat stored in the first and second stores, 7 and 4, may exceed the expected requirement for sanitary water heat. Such conditions may for example arise when an immersion heater 15 located in the first store 7 can be operated using very low-cost electricity, or when demand for sanitary hot water is expected to be very low, such as the middle of a weekday morning when occupants may be expected to have left the building. At such times the secondary heat exchanger 13 could be used to extract heat from the store 4, to supply low grade heat to an auxiliary heat sink 14. Suitable heat sinks may include heat exchangers exposed to outdoor air such as those in air source or solar-source heat pumps, where the heat may be used for defrosting the heat exchanger surfaces during cold, humid conditions. Alternatively heat from the second store 4 may be supplied to heat emitters such as radiators within a building at times when the marginal cost of supplying such heat from a heat pump or boiler is very high.

In the embodiment of figure 3 component 14 may be an auxiliary heat source, a heat sink, or a component that can act either as a heat source or a heat sink (such as an air-source or solar-source heat pump with a heat exchanger exposed to outdoor air). Alternatively, an auxiliary heat source and a separate heat sink may both be provided. When a component that can act either as a heat source or a heat sink is provided, or when an auxiliary heat source and a separate heat sink are provided, the system (or a user) can select whether to supply heat or whether to extract heat via the secondary heat exchanger 13 heat sink (or whether to neither supply nor extract heat).

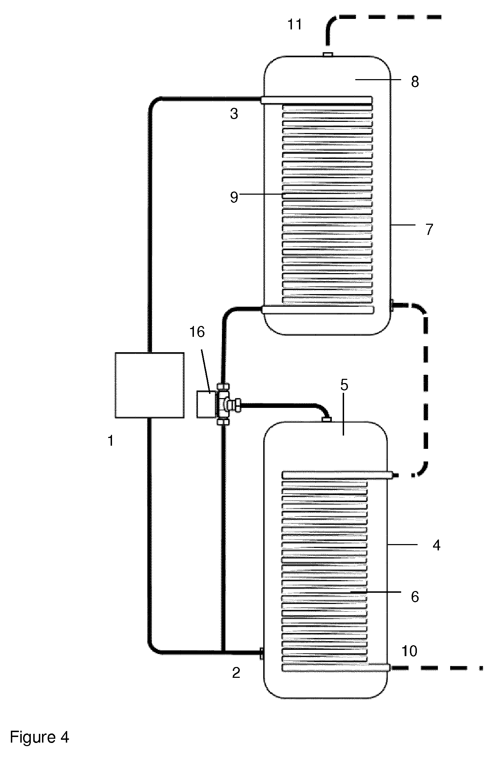

Figure 4 shows a further embodiment of the invention, which is based on the embodiment of figure 1. As shown in figure 4, in this embodiment, a diverting valve 16 is provided to enable process fluid leaving the heat exchanger 9 of the first store to bypass second store 4 and instead return direct from the heat exchanger 9 of the primary store 7 to the heat pump 1. Alternatively, the diverting valve 16 may be set to direct process fluid leaving the heat exchanger 9 of the first store to the main body of the second store 4 as described above with reference to figure 1. This arrangement allows the system (or a user) to choose not to heat the second (pre-heating) store 4 if, for example, the cost of making up for thermal losses from the pre-heating store 4 may be greater than the operating cost savings from pasteurisation of the sanitary fluid in the first store during very cold periods.

In all of the above embodiments, it is understood that some means of circulating the process fluid and sanitary water is included, but for clarity these are not shown. The circulating means could include, but are not limited to, water grid pressure, circulating pumps or thermal-siphon.

The first store 7 and the second store 4 are both preferably provided with thermal insulation for reducing heat loss from the store, but for clarity this thermal insulation is not shown.

Although the first heat store is shown above the second heat store in the figures, this is solely for ease of illustration. In a practical application of the invention the first and heat second heat stores may be arranged relative to one another in any way that suits the physical space available for the heating system. In any embodiment of the invention, however it may be desirable for the second store 6 to be oriented such that the entry port of the heat exchanger 6 of the second store is higher than the exit port of the heat exchanger 6 of the second store. More preferably, the vertical distance between the entry and exit ports of the heat exchanger 6 of the second store for pre-heating incoming sanitary water may be greater than half the internal height of the second store. This ensures good stratification of the second store and thus optimum heat transfer to the incoming sanitary water, as well as the lowest possible return temperature to the heat source which can reduce source-side operating temperatures of a heat pump and increase its efficiency.

In any embodiment of the invention a heat exchanger may be a finned hollow coil, which may for example be manufactured from stainless steel.

Although the invention has been shown and described with respect to a certain embodiment or embodiments, equivalent alterations and modifications may occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein exemplary embodiment or embodiments of the invention.

In addition, while a particular feature of the invention may have been described above with respect to only one or more of several embodiments, such feature may be combined with one or more other features of the other embodiments, as may be desired and advantageous for any given or particular application. For example, the diverter valve 16 and bypass of the second heat store of the embodiment of figure 4 could be provided in any other embodiment of the invention, including the embodiments of Figure 2 or Figure 3. As another example, the secondary heat source 14 or heat sink 14 of the embodiment of Figure 3 could be provided in any other embodiment of the invention, including the embodiments of Figure 1, 2 or 4.

## Claims

1. A heating system for heating a supply fluid, the system comprising:
a heat source;
first and second heat stores connected in series with the heat source, the system being configured to, in a first mode of operation, circulate a process fluid from the heat source through, sequentially, the first heat store and then the second heat store;
wherein the second heat store comprises a body, and at least one first heat exchanger associated with the body of the second heat store for receiving supply fluid; and
wherein the first heat store comprises a body for receiving supply fluid from the second heat store for heating by process fluid received at the first store from the heat source.

2. A heating system according to claim 1 wherein the first heat store comprises at least one heat exchanger associated with the body of the first heat store for receiving process fluid from the heat source.

3. A heating system according to claim 1 or 2 wherein the body of the second heat store receives, in use, process fluid exiting the heat exchanger(s) of the first heat store.

4. A heating system according to claim 1 or 2 wherein the second heat store comprises at least one second heat exchanger associated with the body of the second heat store, the second heat exchanger(s) of the second heat store receiving, in use, process fluid exiting the heat exchanger(s) of the first heat store.

5. A heating system according to claim 4 wherein the body of the second heat store contains a phase change material.

6. A heating system as claimed in claim 5 wherein the phase change material has a liquid-solid phase-change temperature in the range 20° to 60°C.

7. A heating system according to any preceding claim wherein the second heat store comprises at least one third heat exchanger associated with the body of the second heat store, and wherein the system further comprises another heat source for heating process fluid supplied to the third heat exchanger(s).

8. A heating system according to any one of claims 1 to 7 wherein the second heat store comprises at least one third heat exchanger associated with the body of the second heat store, and wherein the system further comprises a heat sink for receiving process fluid from the third heat exchanger(s).

9. A heating system according to any preceding claim and selectively operable in a second mode that allows process fluid leaving the first heat store to bypass the second heat store and return direct to the heat source.

10. A heating system according to claim 9 and comprising: a fluid bypass connected in parallel with the path of process fluid through the second heat store; and a valve for selectively opening the fluid bypass.

11. A heating system according to any preceding claim wherein the vertical distance between an entry port and an exit port of the first heat exchanger in the second heat store is greater than half the internal height of the second heat store.

12. A heating system according to any preceding claim wherein said process fluid is water containing a corrosion inhibitor.

13. A heating system according to any one of claims 1 to 11 wherein said process fluid is a water-glycol mixture containing a corrosion inhibitor.

14. A heating system according to any preceding claim wherein said heat source comprises a heat pump.
